(19) Europäisches Patentamt
European Patent Office
Office européen des brevets

(11) Veröffentlichungsnummer: **0 003 328**
**B1**

(12) # EUROPÄISCHE PATENTSCHRIFT

(45) Veröffentlichungstag der Patentschrift: **24.03.82**

(51) Int. Cl.³: **C 08 L 27/18,** C 08 L 23/08, C 08 K 3/32, H 01 B 3/44

(21) Anmeldenummer: **79100152.2**

(22) Anmeldetag: **19.01.79**

(54) **Stabilisierte Copolymere auf Basis Äthylen-Tetrafluoräthylen, Verfahren zu deren Herstellung und ihre Verwendung.**

(30) Priorität: **24.01.78 DE 2802916**

(43) Veröffentlichungstag der Anmeldung: **08.08.79 Patentblatt 79/16**

(45) Bekanntmachung des Hinweises auf die Patenterteilung: **24.03.82 Patentblatt 82/12**

(84) Benannte Vertragsstaaten: **BE DE FR GB IT NL**

(56) Entgegenhaltungen: **US-A-4 038 234**

(73) Patentinhaber: **HOECHST AKTIENGESELLSCHAFT, *Postfach 80 03 20, D-6230 Frankfurt/Main 80 (DE)***

(72) Erfinder: **Hartwimmer, Robert Dr., Della-Croce-Strasse 10a, D-8263 Burghausen/Salzach (DE)**
Erfinder: **Kuhls, Jürgen, Dr., Unghausen 16a, D-8263 Burghausen/Salzach (DE)**

**EP 0 003 328 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Stabiliserte Copolymere auf Basis Äthylen-Tetrafluoräthylen, Verfahren zu deren Herstellung und ihre Verwendung

Die Erfindung betrifft stabilisierte Äthylen-Tetrafluoräthylen-Copolymere, die neben polymerisierten Äthylen- und Tetrafluoräthylen-Einheiten weitere polymerisierte Einheiten enthalten können, die von Monomeren stammen, welche mit Tetrafluoräthylen copolymerisierbar sind, Verfahren zu deren Herstellung und deren Verwendung.

Es ist aus DE-A 2 114 440 bekannt, Vinylidenfluorid-Copolymere mit verbesserten Wärmealterungseigenschaften durch Polymerisation in einem wässrigen Medium in Gegenwart eines Katalysatorsystems aus einer wasserlöslichen anorganischen Peroxidverbindung und einem wasserlöslichen Hypophosphit herzustellen. Das Verfahren ermöglicht die Erzeugung von Copolymeren, die neben Vinylidenfluorid eine Vielzahl fluorhaltiger, äthylenisch ungesättigter Comonomerer, jedoch keine nichtfluorhaltigen Comonomeren, beispielsweise Äthylen, enthalten können. In den Beispielen 5 und 7 bis 9 wird einem nach diesem Verfahren hergestellten Copolymeren nachträglich Natriumhypophosphit zugesetzt und hierbei festgestellt, dass sich die Wärmealterungseigenschaften verschlechtern.

Es sind ferner aus den DE-A 2 362 254 und 2 638 054 Äthylen-Tetrafluoräthylen-Copolymermassen bekannt, die einen Gehalt von 0,001 bis 5 Gew.-% $\alpha$-Aluminiumoxid bzw. mehr als 0,1 ppm Kupfer oder einer Kupferverbindung, bezogen auf das Gewicht des Äthylen-Tetrafluoräthylen-Copolymeren enthalten. Wie nachfolgend in Vergleichsversuchen nachgewiesen wird, sind die bekannten, stabilisierten Äthylen-Tetrafluoräthylen-Copolymermassen in ihrer Stabilität den Produkten gemäss der nachfolgend beschriebenen Erfindung unterlegen.

Aufgabe der vorliegenden Erfindung ist es, Äthylen-Tetrafluoräthylen-Copolymere, die gegebenenfalls weitere polymerisierte Comonomere enthalten können, zur Verfügung zu stellen, welche verbesserte Stabilität gegenüber Produkten gemäss dem Stand der Technik aufweisen, um insbesondere die bei der im allgemeinen oberhalb 300 °C stattfindenden Verarbeitung, vor allem in Gegenwart von Luftsauerstoff auftretende, unerwünschte thermische Zersetzung, welche zur Verfärbung der erzeugten Produkte unter gleichzeitiger Blasenbildung und Abnahme deren mechanischer Festigkeitswerte führt, weitgehend zu vermeiden oder doch wesentlich zu verbessern.

Dies wird erreicht durch eine Mischung aus

a) 99,999 bis 98 Gew.-%, bezogen auf die Mischung, von mindestens einem Äthylen-Tetrafluoräthylen-Copolymeren, das neben polymerisierten Äthylen- und Tetrafluoräthylen-Einheiten weitere polymerisierte Einheiten enthalten kann, die von Monomeren stammen, welche mit Tetrafluoräthylen copolymerisierbar sind und

b) 0,001 bis 2 Gew.-%, bezogen auf die Mischung, von mindestens einer Säure des Phosphors, die in einer ihrer tautomeren Formen 2 oder 3 Sauerstoff-Atome und 1 oder 2 Wasserstoff-Atome direkt an jedem Phosphor-Atom gebunden enthält, und/oder von mindestens einem Salz dieser Säure,

wobei diese Mischung weitere Stoffe beigemischt enthalten kann.

Enthält die Mischung wesentlich weniger als 0,001 Gew.-% der Komponente b), wird im allgemeinen keine ausreichend stabilisierende Wirkung mehr festgestellt. Bei Gehalten über 2 Gew.-% bleibt die stabilisierende Wirkung mit steigenden Zusatzmengen zwar im Prinzip erhalten, nimmt aber etwas ab, ausserdem treten in zunehmendem Masse andere unerwünschte Erscheinungen auf, so dass bei Gehalten oberhalb 2 Gew.-% im allgemeinen die Nachteile die Vorteile überwiegen.

Vorteilhaft wird für die Mischung ein Copolymeres verwendet, das aus 40 bis 70 Mol-%, bezogen auf das Copolymere, polymerisierten Äthylen-Einheiten besteht. Derartige Copolymere besitzen im allgemeinen einen Schmelzindex, gemessen bei 300 °C und 11 kg Belastung, von 5 bis 400, vorzugsweise 10 bis 300 und insbesondere 15 bis 250 g/10 min. Sie eignen sich besonders für die Weiterverarbeitung im thermoplastischen Zustand zu Halbzeugen und Fertigartikeln.

Neben den ausschliesslich aus Äthylen- und Tetrafluoräthylen-Einheiten aufgebauten Copolymeren werden bevorzugt solche Copolymere eingesetzt, die aus polymerisierten Äthylen- und Tetrafluoräthylen-Einheiten sowie aus bis zu 10 Mol-%, bezogen auf das Copolymere, weiteren polymerisierten Einheiten besteht, die von mindestens einem – im allgemeinen einfach – äthylenisch ungesättigten Monomeren stammen, das mit Tetrafluoräthylen copolymerisierbar ist und keine telogene Aktivität aufweist. Colche Comonomere sind entweder jene, die in das Copolymere Seitenketten, die mindestens ein Kohlenstoff-Atom enthalten, einführen oder ein- oder mehrfach mit Chlor und/oder Brom und/oder bis dreifach mit Fluor substituierte Derivate des Äthylens, z. B. Vinylfluorid, Vinylidenfluorid oder Trifluorchloräthylen. Solche Copolymere sind leicht und kostengünstig zugänglich und/oder besitzen eine besonders günstige Kombination von physikalischen und Verarbeitungseigenschaften.

Für die erfindungsgemässe Wirkung der Mischungskomponente b) ist es günstig, wenn diese möglichst homogen feinverteilt in Mischung mit dem Copolymeren vorliegt. Dies kann vorteilhaft dadurch erreicht werden, dass die Mischungskomponente b), wie weiter unten näher ausgeführt, in wässriger Lösung zugesetzt wird. Daher werden als Komponente b) Stoffe bevorzugt, die zu wenigstens 0,01 Gew.-%, insbesondere zu 0,1 Gew.-%, in Wasser bei 20 °C löslich sind. Wegen der leichten Zugänglichkeit wird vorzugsweise mindestens ein Salz, dessen Kation Ammonium und/oder ein Metallkation der 1. bis 3. Hauptgruppe des Periodischen Systems der Elemente ist, als Komponente b) verwendet.

Solche Kationen sind insbesondere Natrium, Kalium, Magnesium, Calcium, Strontium, Barium und Aluminium.

Neben diesen bevorzugten Salzen können aber auch Salze mit anderen Kationen, beispielsweise Zink oder Mangan sowie auch die freien Säuren verwendet werden. Häufig ist es vorteilhaft, saure Salze zu verwenden, da deren Wasserlöslichkeit meist über der der Neutralsalze liegt. Anstelle der Salze, die Kationen nur einer Art enthalten, können auch solche verwendet werden, die mehrere Kationen enthalten, beispielsweise sogenannte Doppelsalze. Ebenso sind auch Mischungen von 2 oder mehreren Einzelverbindungen (Salzen oder Säuren), sofern sie nach Menge und Art unter die weiter oben gegebene Definition der Komponente b) fallen, verwendbar.

Desgleichen können die erfindungsgemässen Mischungen als Komponente a) mehrere Copolymere enthalten, sofern sie nach Art und Menge unter die weiter oben gegebene Definition der Komponente a) fallen.

Wegen seiner guten Wirksamkeit, guten Beständigkeit und leichten Zugänglichkeit wird als Komponente b) mindestens ein Salz der phosphorigen Säure bevorzugt verwendet, insbesondere ein Magnesium-, Calcium- oder Aluminiumsalz dieser Säure.

Neben der bevorzugten phosphorigen Säure oder, wie sie auch genannt wird, Phosphonsäure: $H_2(HPO_3)$ und ihren Salzen können weitere Säuren bzw. Salze eingesetzt werden, in denen der Phosphor die Oxidationsstufe +3; +2 oder +1 hat; beispielsweise Abkömmlinge der diphosphorigen Säure: $H(H_2P_2O_5)$; der hypodiphosphorigen Säure: $H_2(H_2P_2O_4)$; sowie der hypophosphorigen Säure, auch Phosphinsäure genannt: $H_2(H_2PO_2)$. Von diesen Säuren werden im allgemeinen die Alkali- oder Erdalkalisalze, vor allem das Natrium-, Kalium- oder Calciumsalz verwendet.

Die als Komponente a) eingesetzten Copolymerisate werden beispielsweise nach den in folgenden Schriften beschriebenen Verfahren hergestellt: DE-A 1 595 167; 1 770 440; 1 806 097; 1 957 963; 2 037 028; 2 132 463; 2 233 288; 2 444 516; 2 718 747; US-A 2 468 664; 3 303 154 und 3 444 148. Für die Herstellung geeignete Comonomere werden beispielsweise beschrieben in DE-C 1 162 829; DE-A 2 517 357; DE-A 2 531 511; US-A 3 318 854 und 4 036 802.

Als mit Tetrafluoräthylen copolymerisierbar werden solche Monomere bezeichnet, die imstande sind, durch ihre äthylenisch ungesättigte Gruppe einen integrierenden Bestandteil der aus Tetrafluoräthylen- und Äthyleneinheiten bestehenden Hauptpolymerisat-Kette zu bilden. Solche copolymerisierbaren Monomere dürfen die Copolymerisationsreaktion nicht verhindern.

Solche copolymerisierbaren Monomere sind beispielsweise die fluorierten Vinylmonomeren der allgemeinen Formeln $R-CF=CF_2$ und $ROCF=CF_2$, worin R eine organische Gruppe bedeutet, die cyclisch oder acyclisch sein kann und/oder einen aromatischen Kern enthalten kann, und die 2 bis 15 Kohlenstoff-Atome aufweist. Im allgemeinen ist die organische Gruppe hochgradig fluorsubstituiert, das heisst, sie weist mindestens 1 Fluor-Atom an jedem Kohlenstoff-Atom auf. Die Verbindungen können aber auch andere Atome wie Chlor-Atome als Monosubstituenten an einem Kohlenstoff-Atom aufweisen.

Wasserstoff kann in der Gruppe in einer Stellung enthalten sein, in der er im wesentlichen inert ist, wie in der $\omega$-Stellung als Teil der Gruppe $-CF_2H$ oder als Teil der Gruppe $-CH_3$. Ebenso können die Verbindungen andere Atome wie Schwefel und Stickstoff in solchen Resten enthalten, wie zum Beispiel Sulfon- bzw. Amidgruppen.

Beispiele für fluorsubstituierte Monomere, die erfindungsgemäss verwendet werden können, sind die fluorsubstituierten $\alpha$-Monoolefine wie Hexafluorpropen, Perfluorbuten(1), Perfluorisobuten, Perfluorpenten-1(1), Perfluorhepten-(1), $\omega$-Hydroperfluorocten-(1), Trifluoräthylen, Vinylidenfluorid, Vinylfluorid, Pentafluorpropen, ferner fluorsubstituierte $\alpha$-Monoolefine, die neben Fluor noch andere Halogen-Atome enthalten, wie beispielsweise Trifluorchloräthylen, 1,1-Difluor-2,2-dichloräthylen, 1,2-Difluor-1,2-dichloräthylen, Trifluorbromäthylen, 1-Chlor-2,2-difluoräthylen, ausserdem die fluorsubstituierten Vinyläther der allgemeinen Formel $XCF_2(CF_2)_nOCF=CF_2$, in der X ein Fluor-, Wasserstoff- oder Chlor-Atom bedeutet und n eine ganze Zahl von 1 bis 7 ist. Beispiele für solche Vinyläther sind Perfluor-(äthylvinyl)-äther; Perfluor-(propylvinyl)-äther und 3-Hydroperfluor-(propylvinyl)-äther. Ein anderer fluorsubstituierter Vinyläther, der verwendet werden kann, ist Perfluor(2-methylen-4-methyl-1,3-dioxolan), das in der US-PS 3 308 107 beschrieben ist. Die organische Gruppe (R) in den weiter oben beschriebenen Formeln braucht nicht hochgradig fluorsubstituiert zu sein, wenn man auf ein gewisses Ausmass an Wärmebeständigkeit des Mischpolymerisats verzichten kann. Beispiele für nichthochgradig fluorsubstituierte Monomere, die verwendet werden können, sind die Fluorkohlenwasserstoffvinyl-Monomeren mit fluorsubstituierter Vinylgruppe und die Kohlenwasserstoff-Vinylmonomeren mit fluorsubstituierter Vinylgruppe, zum Beispiel die Monomeren der Zusammensetzung $CF_3(CF_2)_mCH_2OCF=CF_2$, worin m eine ganze Zahl von 0 bis 6 bedeutet und der Zusammensetzung $CH_3(CH_2)_nOCF=CF_2$, worin n eine ganze Zahl von 1 bis 7 bedeutet. Diese Vinyläther werden durch Umsetzung des entsprechenden Natriumalkoholats mit Tetrafluoräthylen unter den in der US-A 3 159 609 beschriebenen Bedingungen hergestellt. Beispiele für diese Vinyläther sind n-Butyltrifluorvinyläther und 2,2,3,3,3-Pentafluorpropyltrifluorvinyläther.

Eine andere Gruppe von Vinylmonomeren, die verwendet werden können, sind die Vinylester der allgemeinen Formel

$$R^1-\overset{\overset{\displaystyle O}{\|}}{C}-OCH=CH_2$$

in der $R^1$ die oben für R angegebene Bedeutung hat mit dem Unterschied, dass $R^1$ nur ein Kohlen-

stoff-Atom zu enthalten braucht. Ein Beispiel für ein solches Vinylmonomeres ist Vinylacetat.

Weitere Vinylmonomere, bei denen die Vinylgruppe eine Kohlenwasserstoff-Gruppe ist und die erfindungsgemäss verwendet werden können, sind die Vinylmonomeren der allgemeinen Formeln

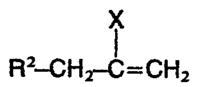 und 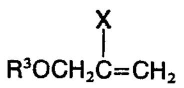

worin $R^2$ und $R^3$ Perfluoralkyl-Gruppen oder Chlorfluoralkyl-Gruppen mit 1 bis 7 Kohlenstoff-Atomen bedeuten und X ein Wasserstoff-Atom oder eine Methyl-Gruppe bedeutet. Die einfachsten dieser Vinylmonomeren werden durch Umsetzung von Hexafluoraceton mit Propylen in Gegenwart von Aluminiumchlorid bzw. durch Umsetzung von Hexafluoraceton mit Allylbromid in Gegenwart von Cäsiumfluorid hergestellt. Eine weitere Beschreibung von Vinylmonomeren dieser allgemeinen Formeln sowie eines Verfahrens zur Herstellung derselben findet sich bei Knunyants; Bull. Acad. Sci., UdSSR Div. Chem. Sci 355 (1962) sowie in der NL-OA 6 602 167. Typische Gruppen $R^2$ und $R^3$ für diese Monomeren sind die Perfluoralkyl-Gruppen wie $CF_3CF_2CF_2-$ und $(CF_3)_2CF-$, sowie die Chlorfluoralkyl-Gruppen wie $(CClF_2)_2CF-$. $R^2$ kann auch ein sekundärer oder tertiärer halogensubstituierter Alkoholrest sein, wie die Gruppe $-(CClF_2)_2COH$ oder $-(CF_3)_2COH$, wie sie in der US-A 3 444 148 beschrieben sind. Beispiele für diese Vinylmonomeren sind 4,4,4-Trifluorbuten-(1), 4,4,5,5,5-Pentafluorpenten-(1), 1,1,1-Trifluor-2-(trifluormethyl)-4-penten-2-ol, 1-Chlor-1,1-difluor-2-(monochloridfluormethyl)-4-penten-2-ol, 1,1,1-Trifluor-2-2(trifluormethyl)-4-methyl-4-penten-2-ol, 4-(Trifluormethyl)-4,5,5,5-tetrafluorpenten-(1), Allyl-heptafluorisopropyläther, Allyl-1,3-dichlorpentafluorisopropyläther und 2-Methylallyl-heptafluorisopropyläther.

Ferner können Vinylmonomere der allgemeinen Formel

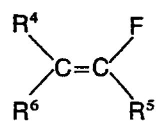

eingesetzt werden, die weiter oben noch nicht genannt sind, worin bedeuten

$R^4$ = F oder H; $R^5$ = F oder Cl
$R^6$ = –Cl; $-R_F$; $-OR_F$, $-R_FH$; $-OR'_FH$; $-R'_FCl$; $-OR'_FCl$

oder

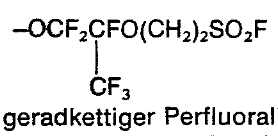

worin $R_F$ ein geradkettiger Perfluoralkylrest mit 1 bis 5 Kohlenstoff-Atomen und $R'_F$ ein geradkettiger Perfluoralkylenrest (perfluoriertes Alkan-diradikal) mit 1 bis 5 Kohlenstoff-Atomen ist, in denen der bezeichnete Substituent ein Omega-Substituent ist und, wenn $R_5$=F ist, $R_4$ und $R_6$ zusammengenommen folgender Rest sein kann

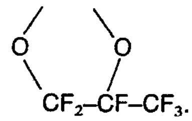

Weiterhin können Vinylmonomere mit der allgemeinen Formel

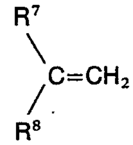

worin $R^7$ und $R^8$ unabhängig voneinander $-CF_3$ oder $-CClF_2$ bedeuten, verwendet werden.

Ausserdem können Vinylmonomere der allgemeinen Formel

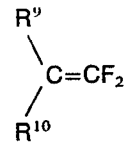

eingesetzt werden, die weiter oben noch nicht genannt sind, worin bedeuten

$R^9$ = F; H oder Cl und
$R^{10}$ = $R_F$; $-OR'_FX$ oder $-OR'_FX$ worin

$R_F$ ein geradkettiger Perfluoralkylrest mit 1 bis 5 Kohlenstoffatomen; $R'_F$ ein zweiwertiger, geradkettiger Perfluoralkylenrest mit 1 bis 5 Kohlenstoff-Atomen, bei dem die Wertigkeiten an jedem Ende der geraden Kette liegen und X = H oder Cl ist; wobei, wenn $R^9$ = F ist $R^{10}$ auch entweder

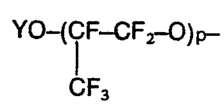

worin p = 1 oder 2 und Y ein Perfluoralkylrest mit 1 bis 9 C-Atomen ist, oder

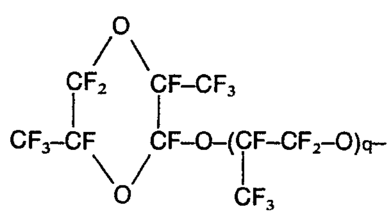

sein kann, worin q = 0,1 oder 2 ist mit der Massgabe, dass $R^9$ und $R^{10}$ auch zusammen den zweiwertigen Rest der Formel

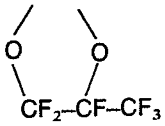

bilden können.

Speziell bevorzugte Monomere sind Hexafluorpropen und Perfluor-(propylvinyl)-äther.

In dem Äthylen-Tetrafluoräthylen-Copolymeren können im allgemeinen 0,1 bis 10 Mol-%, bezogen auf das Copolymere, weitere polymerisierte

Einheiten enthalten sein, die von einem oder mehreren der oben näher ausgeführten Monomeren stammen, welche mit Tetrafluoräthylen copolymerisierbar sind.

Die Herstellung der Copolymeren erfolgt im allgemeinen in Emulsion oder Suspension in einem flüssigen Medium, das häufig zu einem überwiegenden Teil aus Wasser besteht. Es kann aber auch ganz oder teilweise aus Lösungsmitteln wie beispielsweise tert.-Butanol oder halogenierten Kohlenwasserstoffen wie 1,1,2-Trichlor-1,2,2-trifluoräthan bestehen. Die übrigen Polymerisationsparameter sind den weiter oben genannten Schriften zu entnehmen.

Wie oben bereits ausgeführt, soll die erfindungsgemässe Mischung 0,001 bis 2 Gew.-%, bezogen auf die Mischung, der Komponente b) enthalten. Bevorzugt sind Mischungen, welche 0,01 bis 2 Gew.-% der Komponente b) und 99,99 bis 98 Gew.% der Komponente a) enthalten. Besonders günstige Ergebnisse werden erzielt, wenn die Mischung 0,02 bis 0,5 Gew.-% der Komponente b) und 99,98 bis 99,5 Gew.-% der Komponente a) enthält.

Der erfindungsgemässen Mischung können weitere Stoffe beigemischt sein. Beispielsweise Glasfasern, Pigmente wie Titandioxid, Siliciumdioxid, Aluminiumoxid, Chromoxid, kobalthaltige Pigmente, Graphit, Russ, Talkum, Cadmiumsulfid, Eisenoxid, ferner feinteilige Metalle oder Legierungen, beispielsweise Nickel, Chromnickelstahl, Bronze, ausserdem andere fluorhaltige Polymere und/oder Copolymere, beispielsweise Polytetrafluoräthylen, ferner Reste von Emulgatoren, Dispersionsstabilisatoren, Katalysatoren und weiteren, bei der Herstellung der Mischungskomponente a) gebrauchten Hilfsstoffen. Die erfindungsgemässe Mischung kann auch organische Lösungsmittel wie Benzin, chlorierte Kohlenwasserstoffe, aliphatische Alkohole, Äther, Ketone oder Ester mit 1 bis etwa 8 Kohlenstoff-Atomen sowie auch Wasser enthalten, wobei zum Beispiel die Mischungskomponente a) unter Wirkung eines zugesetzten bekannten Dispergiermittels in Wasser dispergiert und die Mischungskomponente b) in diesem Wasser gelöst vorliegen kann. In diesem Fall muss allerdings darauf geachtet werden, dass nach Entfernung des Wassers oder sonstigen Lösungsmittels, vor der thermischen Beanspruchung der erfindungsgemässen Mischung ausreichende Mengen der Komponente b) in dieser Mischung verbleiben. Dies kann beispielsweise dadurch erreicht werden, dass man Wasser bzw. das Lösungsmittel unter schonenden Bedingungen, gegebenenfalls unter Verwendung von Unterdruck, verdampft.

Die überrraschend gute thermostabilisierende Wirkung der Komponente b) tritt im wesentlichen in Verbindung mit Äthylen-Tetrafluoräthylen-Copolymeren ein. Eine geringere Wirkung wird teilweise auch bei nichtäthylenhaltigen Copolymeren des Tetrafluoräthylens beobachtet, beispielsweise bei solchen, die neben Tetrafluoräthylen noch Hexafluorpropen und/oder Perfluorvinyläther und/oder Vinylidenfluorid enthalten.

Vorzugsweise wird die Mischung so hergestellt, dass nach Herstellung der Mischungskomponente a) durch Copolymerisation der entsprechenden Monomeren in Emulsion oder Suspension die Mischungskomponente b) bei der Aufarbeitung des Copolymerisates zugesetzt wird. Die Zugabe der Komponente b) erfolgt zweckmässig in feinverteilter Form, mit einer mittleren Teilchengrösse von etwa 10 bis etwa 100, vorzugsweise 30 bis 60 $\mu$m. Die Komponente b) kann hierbei trocken, sofern sie sich nach der Zugabe nicht auflöst, in feingemahlener Form sowie auch in einer Flüssigkeit, beispielsweise Wasser, suspendiert oder emulgiert zugegeben werden, vorzugsweise wird sie jedoch in Form einer wässrigen Lösung zugesetzt. Diese kann beispielsweise mittels Düsen oder anderer bekannter Zerstäubungseinrichtungen auf die pulverförmige Komponente a) aufgesprüht werden, wobei letztere zweckmässig durch Rühren, Umschaufeln, Aufwirbeln, Herabrieseln oder ähnliche Methoden bewegt wird. Die Komponente b) kann ferner, nach Zugabe der entsprechenden Ausgangsstoffe, auch erst in situ gebildet werden, beispielsweise durch eine Fällungsreaktion, wobei die Komponente b) auf den Partikeln der Komponente a) ausgefällt oder nach Fällung in der wässrigen Flotte von diesen Partikeln adsorbiert wird.

In einer besonders bevorzugten Ausführungsform wird die Komponente b) während der Aufarbeitung, die beispielsweise in Form eines Nassgranulierungsprozesses erfolgen kann, dem Copolymeren nach dem letzten Waschvorgang in Gestalt einer 0,01- bis 3gewichtsprozentigen, vorzugsweise einer 0,02- bis 0,75gewichtsprozentigen und insbesondere einer 0,04- bis 0,6gewichtsprozentigen wässrigen Lösung zugegeben. Das nach dem letzten Waschen anfallende Feuchtprodukt enthält im allgemeinen 40 bis 60 Gew.-%, bezogen auf Feuchtprodukt, an Copolymeren, die restlichen 60 bis 40 Gew.-% bestehen aus Waschflüssigkeit (im allgemeinen Wasser). Um eine gute Verteilung der Komponente b) auf dem Copolymeren zu erreichen, soll höchstens 1 Gewichtsteil, vorteilhaft nur 0,01 bis 0,5 Gewichtsteile und insbesondere 0,1 bis 0,3 Gewichtsteile Feuchtprodukt mit 1 Gewichtsteil der wässrigen Lösung behandelt werden, wobei zweckmässig durch Rühren für eine innige Durchmischung zu sorgen ist. Der überschüssige Teil dieser wässrigen Lösung, das heisst der Teil, den man nicht zum Erhalt eines Feuchtproduktes, das etwa 40 bis 60 Gew.-%, vorzugsweise 50 bis 55 Gew.-% Copolymeres enthält, benötigt, wird anschliessend durch Absaugen bei schwachem Unterdruck, Dekantieren, Filtrieren oder ähnliche Operationen vom Copolymeren getrennt. Das so erhaltene Feuchtprodukt wird anschliessend bei Temperaturen bis zu 220 °C, gegebenenfalls unter vermindertem Druck, getrocknet. Hierbei wird zweckmässig, insbesondere bei höheren Temperaturen über 50 und bis 100 °C, in einer Inertgas- beispielsweise Stickstoffatmosphäre gearbeitet, besonders wenn Gefahr besteht, dass eine grössere

Menge der Komponente b) durch die Einwirkung, beispielsweise von Luftsauerstoff, in eine Verbindung übergeführt wird, in der der Phosphor eine höhere Oxidationsstufe als +3 besitzt (siehe hierzu die Zusammenstellung der Oxidationsstufen des Phosphors in verschiedenen Phosphorsäuren in Hollemann-Wiberg; Lehrbuch der anorganischen Chemie 71.–80. Aufl., 1971, Seite 399; Verlag de Gruyter).

Für das vorstehend beschriebene, besonders bevorzugte Verfahren kann auch ein trockenes Copolymeres eingesetzt werden oder ein solches, das einen anderen Gehalt an Waschflüssigkeit als 40 bis 60 Gew.-% besitzt. Ebenso kann das nach dem Abtrennen der wässrigen Lösung, mit der das Copolymere behandelt wurde, vorliegende Feuchtprodukt einen anderen Gehalt an Copolymeren haben als 40 bis 60 Gew.-%. In diesen Fällen muss die Konzentration der Komponente b) in der wässrigen Lösung an die veränderten Verhältnisse so angepasst werden, dass nach dem Trocknen ein Copolymeres erhalten wird, welches 0,001 bis 2 Gew.-% der Komponente b) enthält.

Die Menge der Komponente b), die zur Behandlung eingesetzt wird, um eine bestimmte Konzentration, die zwischen 0,001 und 2 Gew.-% liegen soll, im trockenen Endprodukt zu erreichen, lässt sich beispielsweise nach folgender Formel errechnen:

$$G_b = \frac{K(G_1 + F_1) \cdot (G_p - F_1)}{100 \cdot F_2}$$

worin bedeuten:

- $G_b$ = Menge der eingesetzten Komponente b)
- $G_1$ = Menge der eingesetzten Behandlungslösung
- $G_p$ = Menge des eingesetzten Feuchtproduktes, das das Copolymere enthält
- $F_1$ = Menge der wassermischbaren Anteile im eingesetzten Feuchtprodukt
- $F_2$ = Menge der unter den Trocknungsbedingungen flüchtigen Anteile im feuchten Endprodukt
- K = gewünschte Konzentration der Komponente b) im trockenen Endprodukt in [Gew.%]

(alle Mengen sind Gewichtsmengen, beispielsweise in [g])

Für die weitere Verarbeitung wird die so gewonnene Mischung der Komponente a) und b) zweckmässigerweise einem Schmelzgranulierungsprozess unterworfen. Dazu wird die Mischung in einem Extruder aufgeschmolzen, zu einem Strang extrudiert, und dieser Strang wird zu Granulaten zerschnitten, deren Grösse dem weiteren Verarbeitungsvorgang angepasst ist. Neben der Verbesserung der Verarbeitungseigenschaften, wie Rieselfähigkeit, Dosierbarkeit und Erhöhung des Schüttgewichtes wird hierdurch eine homogenere Verteilung der beigemischten Zuschlagstoffe, also auch der Thermostabilisatoren der Komponente b), erreicht.

Sofern eine Copolymer-Dispersion erzeugt werden soll, von der die flüssige Phase überwiegend aus Wasser besteht, wird die Komponente b) zweckmässig in dem Dispersionswasser gelöst. Sie kann auch fein gemahlen der Dispersion zugesetzt und mitdispergiert werden.

Die erfindungsgemäss stabilisierten Copolymerisate eignen sich zur Herstellung von Formkörpern und Halbzeugen durch Verarbeitung im Press-, Spritzguss- und Extrusionsverfahren sowie für Beschichtungen auf metallische Oberflächen oder auf organische über ca. 200 bis 250 °C temperaturbeständige Substrate. Sie eignen sich besonders zum Überziehen von Drähten, die hohen Temperaturen ausgesetzt werden sollen.

Die erfindungsgemässen Mischungen zeigen eine überraschend hohe thermische Beständigkeit, gekennzeichnet durch geringen Gewichtsverlust, geringe Schaumbildung sowie geringe oder überhaupt nicht auftretende Verfärbung bei konstant guten mechanischen Werten wie Reissfestigkeit und Reissdehnung. Durch die geringe Schaumbildung wird die Entstehung von Blasen und Lunkern bei der thermoplastischen Verarbeitung, zum Beispiel bei der Extrusion zur Herstellung von Formkörpern, weitgehend vermieden. Infolge des geringen Gewichtsverlustes bei thermischer Beanspruchung können aus dem fluorhaltigen Copolymeren nur äusserst geringe Mengen korrosiver und teilweise giftiger Gase oder Dämpfe entstehen. Dies ist sowohl bezüglich des Verschleisses an den Verarbeitungsmaschinen sowie auch vom arbeitshygienischen Standpunkt aus ein wesentlicher Vorteil.

In nachfolgenden Beispielen und Vergleichsversuchen werden Herstellung und Eigenschaften der erfindungsgemässen stabilisierten Copolymerisate näher erläutert und mit nach dem Stande der Technik stabilisierten Copolymerisaten verglichen. Der besseren Übersichtlichkeit halber werden die Messergebnisse in Tabellen dargestellt.

Beispiele 1 und 2 sowie Vergleichsversuche A bis E

Es wird jeweils ein auf 50 $\mu$m mittleren Teilchendurchmesser gemahlenes Äthylen-Tetrafluoräthylen-Copolymerisat, das 22 Gew.-% = 50 Mol-% polymerisierte Äthylen-Einheiten und ausser Tetrafluoräthylen-Einheiten 2 Mol-% (bezogen auf Polymeres) polymerisierte Hexafluorpropen-Einheiten enthält, verwendet. Zu diesem Copolymerisat werden die in Tabelle 1 verzeichneten Stoffe in der dort ebenfalls aufgetragenen Konzentration zugegeben. Diese Stoffe waren vorher auf eine mittlere Teilchengrösse von ca. 50 $\mu$m gemahlen worden. Nach der Zugabe wird intensiv durchmischt und jeweils 2 Gramm der gebildeten Mischung unter Luftzutritt eine Stunde auf 340 °C erhitzt. Die dabei auftretende Schaumbildung und Verfärung wird visuell nach folgender Farbnotenskala festgestellt (Test 1).

| Farbe | Beurteilungsnote |
|---|---|
| schwarz | 6 |
| dunkelbraun | 5 |
| hellbraun | 4 |
| dunkelgelb | 3 |
| hellgelb | 2 |
| farblos | 1 |

Von einem weiteren Teil der Mischung werden mit Hilfe eines Schmelzindex-Gerätes mit den Düsenabmessungen Länge/Durchmesser: 8/2,08 mm; Kolbenfläche: 0,64 $cm^2$ bei 300 °C und unter einer Belastung von 11 kg etwa 5 cm lange Stränge hergestellt. Diese Stränge werden zunächst gewogen und dann 120 Stunden bei 200 °C gelagert (Test 2). Nach dieser Lagerung wird visuell die Verfärbung und durch erneute Wägung der Gewichtsverlust in Prozent ermittelt. Die gefundenen Werte sind in nachfolgender Tabelle 1 aufgeführt, wobei die Vergleichsversuche A und B dem Verfahren in der DE-OS 2 638 054 und die Vergleichsversuche C und D dem Verfahren der DE-OS 2 362 254 entsprechen. Der Vergleichsversuch E ist ein Blindversuch, der ohne Zusatz eines Stabilisators durchgeführt wurde.

Tabelle 1

| Beispiel bzw. Vergleichsversuch | Zugesetzter Stoff | Gew.-% bezogen auf ETFE | Test 1 Schäumung | Test 1 Farbe | Test 2 Farbe | Test 2 % Gew.-Verlust |
|---|---|---|---|---|---|---|
| A | CuO | 0.2 | stark | 5 | 5–6 | 0.33 |
| B | CuO | 1.0 | stark | 5–6 | 6 | 0.64 |
| 1 | $Mg(H_2PO_3)_2$ | 0.2 | sehr wenig | 2 | 2 | 0.16 |
| 2 | $Mg(H_2PO_3)_2$ | 1.0 | wenig | 3 | 2 | 0.40 |
| C | $\alpha$-$Al_2O_3$ | 0.1 | wenig | 4–5 | 2 | 0.63 |
| D | $\alpha$-$Al_2O_3$ | 0.2 | wenig | 4–5 | 2 | 0.54 |
| E | – | – | stark | 4–5 | 3 | 1.02 |

Beispiel 3 und Vergleichsversuche F bis H

Je 400 Gramm des in Beispiel 1 genannten Copolymerisats in feuchter Form, wie es nach der Polymerisation und dem letzten Waschvorgang angefallen ist, und ca. 50 Gew.-% Wasser enthält, werden mit je 1000 ml einer wässrigen Lösung von je 2,4 Gramm der Stoffe, die in Tabelle 2 aufgeführt sind, 5 Minuten lang bei 20 °C gerührt. Anschliessend wird der Feststoff von der Flüssigkeit durch Absaugen mit schwachem Unterdruck getrennt. Es wird ein Feuchtprodukt mit ca. 50 Gew.-% unter den Trocknungsbedingungen flüchtigen Anteilen erhalten, das nun unter Stickstoff 12 Stunden bei 200 °C getrocknet wird. Im Falle von Vergleichsversuch H unterbleibt die Behandlung des feuchten Copolymerisats mit der wässrigen Lösung, das Feuchtprodukt wird direkt getrocknet (Blindversuch). Mit den so erhaltenen, getrockneten Produkten werden die Tests 1 und 2, wie im vorhergehenden Abschnitt (Beispiele 1 und 2 sowie Vergleichsversuche A bis E) beschrieben, durchgeführt. Nachfolgende Tabelle 2 zeigt die erhaltenen Messwerte.

Tabelle 2

| Beispiel bzw. Vergleichsversuch | Zugesetzter Stoff | Gew.-% bezogen auf ETFE | Test 1 Schäumung | Test 1 Farbe | Test 2 Farbe | Test 2 % Gew.-Verlust |
|---|---|---|---|---|---|---|
| F | $Cu(NO_3)_2$ | 0.2 | sehr stark | 5 | 3 | 0,15 |
| G | $CuCl_2$ | 0,2 | sehr stark | 5 | 3 | 1,11 |
| 3 | $Mg(H_2PO_3)_2$ | 0,2 | wenig | 2 | 1 | 0,06 |
| H | – | – | stark | 4 | 3 | 0,9 |

Beispiele 4 und 5 sowie Vergleichsversuch I

52 kg einer auf 10 Gew.-% Feststoff verdünnten, wässrigen Dispersion des Copolymerisats von Beispiel 1 werden nach Zugabe von 50 $cm^3$ konzentrierter Salzsäure bie 20 °C mit Hilfe eines Impellerrührers verdickt und nach Zugabe von 4,2 l Benzin (Kp. 80 bis 100 °C) unter Fortsetzung des Rührens auf eine mittlere Teilchengrösse von $d_{50}$=500 $\mu$ nass granuliert. Nach Ablassen der wässrigen Flotte wird dreimal mit 35 l Wasser, 5 Minuten unter Rühren gewaschen. Anschliessend wird das feuchte Polymerisat mit 20 l Aceton und dreimal mit 35 l Wasser gewaschen und mit schwach vermindertem Druck abgesaugt. Es wird ein Feuchtprodukt mit etwa 50 Gew.-% Wasser erhalten, das in drei gleiche Gewichtsteile geteilt wird. Das erste Drittel des Feuchtproduktes wird ohne weitere Behandlung 12 Stunden unter Stickstoff bei 200 °C getrocknet (Vergleichsversuch I). Das nächste Drittel des Feuchtproduktes wird mit 24 l Wasser, die 51,4 Gramm $Mg(H_2PO_3)_2$ gelöst enthalten, 5 Minuten bei 20 °C gerührt, danach unter schwach vermindertem Druck abgesaugt, wobei ein Feuchtprodukt mit etwa 50 Gew.-% unter den Trocknungsbedingungen flüchtigen Anteilen erhalten wird, welches anschliessend 12 Stunden unter Stickstoff bei 200 °C getrocknet wird (Beispiel 4).

Das letzte Drittel des Feuchtproduktes wird ebenso behandelt wie vorstehend beschrieben, mit dem einzigen Unterschied, dass die 24 l Wasser nicht 51,4, sondern 128,5 Gramm $Mg(H_2PO_3)_2$ gelöst enthalten (Beispiel 5). Von den so erhaltenen getrockneten Produkten werden Normstäbe nach ASTM-D 1708 extrudiert und diese anschliessend unter Luftzutritt 500 Stunden bei 210 °C gealtert. Vor und nach Alterung werden an den Normstäben folgende Messungen nach ASTM-D 1708 durchgeführt: Reissfestigkeit (Rf), Streckspannung (St.Sp) und Reissdehnung (RD); ferner wurde die Farbe der Stäbe visuell beurteilt nach der weiter oben angegebenen Farbnotenskala. Die ermittelten Werte sind in Tabelle 3 wiedergegeben.

Beispiele 6 bis 9 und Vergleichsversuch J

Es wird verfahren wie im vorangegangenen Abschnitt (Beispiele 4 und 5 sowie Vergleichsversuch I) beschrieben, mit dem Unterschied, dass das nach den Wäschen erhaltene Feuchtprodukt in fünf gleiche Gewichtsteile aufgeteilt wird. Das erste Fünftel wird ohne weitere Behandlung 12 Stunden unter Stickstoff bei 200 °C getrocknet (Vergleichsversuch J). Die übrigen Fünftel werden je mit 10 l Wasser, in denen vorher folgende Mengen verschiedener Stoffe gelöst werden, wie im vorangegangenen Abschnitt beschrieben, behandelt:
Zweites Fünftel: 11 g $Mg(H_2PO_3)_2$ (Beispiel 6);
drittes Fünftel: 44,1 g $Al(H_2PO_3)_3$ (Beispiel 7);
viertes Fünftel: 33,06 g $Zn(H_2PO_3)_2$ (Beispiel 8) und
fünftes Fünftel: 22 g $NaH_2PO_2$ (Beispiel 9).

Nach der Behandlung wird unter schwach vermindertem Druck abgesaugt, wobei ein Feuchtprodukt mit ca. 50 Gew.-% flüchtigen Anteilen erhalten wird. Dieses wird unter Stickstoff 12 Stunden bei 200 °C getrocknet. Von den so erhaltenen Produkten werden Normstäbe nach ASTM-D 1708 hergestellt und an diesen die Messungen, wie im vorangegangenen Abschnitt beschrieben, durchgeführt. Ebenso wird die Farbe der Normstäbe visuell beurteilt. Die ermittelten Werte sind in nachfolgender Tabelle 3 angegeben.

Von den Beispielen 4 bis 9 und den Vergleichsversuchen I und J werden ausserdem an den gealterten Normstäben der Gewichtsverlust ermittelt. Werte siehe Tabelle 3.

Beispiel 10

In feiner Form ausgefälltes Magnesiumphosphit $MgHPO_3$ wird getrocknet und nochmals gemahlen.

Das so gewonnene feine Pulver wird im Gewichtsverhältnis 1:1200 mit einem ebenfalls als trockenes feines Pulver vorliegenden Copolymeren, bestehend aus 50 Mol-% Tetrafluoräthylen-Einheiten und 50 Mol-% Äthylen-Einheiten, in einem Fluidmischer abgemischt. Die Mischung wird aufgeschmolzen und zu Strängen mit 2 mm Durchmesser schmelzextrudiert. Das Produkt wird 86 Stunden bei 200 °C gealtert. Das so stabilisierte und behandelte Copolymere besitzt auch nach der Alterung eine weisse Farbe und weist einen Gewichtsverlust von 0,11% auf. Dagegen ist eine gleiche, jedoch unstabilisierte Probe dieses Copolymeren gelbstichig gefärbt und weist einen Gewichtsverlust von 0,31% auf.

Beispiel 11

Zu 18 kg Feuchtprodukt, enthaltend 10 kg Feststoff eines Copolymeren, bestehend aus 50 Mol-% Tetrafluoräthylen-Einheiten, 49,2 Mol-% Äthylen-Einheiten, 0,7 Mol-% Hexafluorpropen-Einheiten und 0,1 Mol-% Einheiten des Perfluor-(propylvinyl)-äthers wird nach dem letzten Waschvorgang eine Lösung aus 60 g $Mg(H_2PO_3)_2$ in 60 l Wasser (0,1 Gew.-%) zugegeben, und das Ganze wird mit einem Schnellrührer 20 Minuten intensiv durchgerührt. Man lässt die Aufschlämmung dann absitzen, trennt den Feststoff ab und trocknet ihn 12 Stunden bei 200 °C. Aus diesem Feststoff schmelzextrudierte Bänder (10 · 150 mm im Bündel zu 10 Stück) werden 100 Stunden bei 200 °C gealtert. Die so stabilisierten Proben weisen danach eine weisse Farbe auf und haben einen Gewichtsverlust von 0,1% erlitten. In gleicher Weise behandelte unstabilisierte Proben sind ebenfalls im wesentlichen weiss, weisen aber einen Gewichtsverlust von 0,21% auf.

Tabelle 3

| Beispiel bzw. Vergleichsversuch | Zugesetzter Stoff | Gew.% | Vor der Alterung Rf N/mm² | St. Sp. N/mm² | RD % | Farbe | Alterung 500 Std. 210 °C Rf N/mm² | St. Sp. N/mm² | RD % | Gew.-Verl. % | Farbe |
|---|---|---|---|---|---|---|---|---|---|---|---|
| I | – | – | 40,7 | 31,5 | 160 | 1 | 25,0 | 25,0 | 40 | 3,71 | 4–5 |
| | | | 42,1 | 33,4 | 160 | | 23,6 | 23,6 | 35 | | |
| 4 | $Mg(H_2PO_3)_2$ | 0,2 | wie Vergleichsvers. I | | | 1 | 36,0 | 33,4 | 130 | 0,1 | 1 |
| | | | | | | | 36,7 | 32,4 | 125 | | |
| 5 | $Mg(H_2PO_3)_2$ | 0,5 | wie Vergleichsvers. I | | | 1 | 34,1 | 33,7 | 105 | 0,13 | 1 |
| | | | | | | | 35,3 | 33,0 | 100 | | |
| J | – | – | 39,5 | 31,8 | 150 | 1 | 22,0 | 23,0 | 45 | 2,95 | 4–5 |
| | | | 40,5 | 32,3 | 170 | | 21,1 | 22,6 | 30 | | |

Vorsetzung Tabelle 3

| Beispiel bzw. Vergleichs-versuch | Zugesetzter Stoff | Gew.% | Vor der Alterung Rf N/mm² | St. Sp. N/mm² | RD % | Farbe | Alterung 500 Std. 210 °C Rf N/mm² | St. Sp. N/mm² | RD % | Gew.-Verl. % | Farbe |
|---|---|---|---|---|---|---|---|---|---|---|---|
| 6 | $Mg(H_2PO_3)_2$ | 0,1 | 39,1 | 32,1 | 150 | 1 | 32,6 | 31,6 | 90 | 0,23 | 2 |
| | | | 40,2 | 32,7 | 160 | | 33,4 | 33,9 | 95 | | |
| 7 | $Al(H_2PO_3)_3$ | 0,4 | wie Beispiel 6 | | | 1 | 33,2 | 31,6 | 140 | 0,14 | 1 |
| | | | | | | | 34,7 | 32,0 | 130 | | |
| 8 | $Zn(H_2PO_3)_2$ | 0,3 | wie Beispiel 6 | | | 1 | 34,2 | 30,1 | 120 | 0,12 | 1 |
| | | | | | | | 34,7 | 31,6 | 125 | | |
| 9 | $NaH_2PO_2$ | 0,2 | wie Beispiel 6 | | | 1 | 28,6 | 28,3 | 90 | 0,25 | 3 |
| | | | | | | | 27,4 | 26,9 | 105 | | |

Die in den erfindungsgemässen Mischungen enthaltenen Mengen der Komponente b) können analytisch entweder mit Hilfe der Röntgenfluoreszenzmethode durch Messung der $K_\alpha$-Linie des Phosphors oder mit Hilfe eines spektralphotometrischen Verfahrens bestimmt werden, wobei bei letzterem das die Komponente b) enthaltende Copolymere oxydativ aufgeschlossen und mit einer Molybdat-Lösung versetzt wird. Die Extinktion des so entstehenden Phosphor-Molybdänblaus wird spektralphotometrisch ermittelt und daraus der Phosphorgehalt bzw. die Komponente b) errechnet.

**Patentansprüche**

1. Mischung bestehend aus:
a) 99,999 bis 98 Gew.-%, bezogen auf die Mischung, von mindestens einem Äthylen-Tetrafluoräthylen-Copolymeren, das neben polymerisierten Äthylen- und Tetrafluoräthylen-Einheiten weitere polymerisierte Einheiten enthalten kann, die von Monomeren stammen, welche mit Tetrafluoräthylen copolymerisierbar sind und
b) 0,001 bis 2 Gew.-%, bezogen auf die Mischung, von mindestens einer Säure des Phosphors, die in einer ihrer tautomeren Formen 2 oder 3 Sauerstoff-Atome und 1 oder 2 Wasserstoff-Atome direkt an jedem Phosphor-Atom gebunden enthält, oder/und von mindestens einem Salz dieser Säure,
wobei diese Mischung weitere Stoffe beigemischt enthalten kann.

2. Mischung nach Anspruch 1, dadurch gekennzeichnet, dass sie aus 99,99 bis 98 Gew.-% der Komponente a) und 0,01 bis 2 Gew.-% der Komponente b) besteht.

3. Mischung nach Ansprüchen 1 und 2, dadurch gekennzeichnet, dass sie ein Copolymeres enthält, das aus 40 bis 70 Mol-%, bezogen auf das Copolymere, polymerisierten Äthylen-Einheiten besteht.

4. Mischung nach Ansprüchen 1 bis 3, dadurch gekennzeichnet, dass sie ein Copolymeres enthält, das aus polymerisierten Äthylen-, Tetrafluoräthylen- und 0 bis 10 Mol-%, bezogen auf das Copolymere, weiteren Einheiten besteht, die von mindestens einem einfach äthylenisch ungesättigten Monomeren stammen, das mit Tetrafluoräthylen copolymerisierbar ist und keine telogene Aktivität aufweist.

5. Mischung nach Ansprüchen 1 bis 4, dadurch gekennzeichnet, dass sie als Komponente b) mindestens ein Salz enthält, dessen Kation Ammonium und/oder ein Metallkation der ersten bis dritten Hauptgruppe des Periodischen Systems der Elemente ist und das zu wenigstens 0,01 Gew.-% in Wasser bei 20 °C löslich ist.

6. Mischung nach Ansprüchen 1 bis 5, dadurch gekennzeichnet, dass sie mindestens ein Salz der phosphorigen Säure enthält.

7. Mischung nach Anspruch 6, dadurch gekennzeichnet, dass sie mindestens ein Magnesium-, Calcium- oder Aluminiumsalz der phosphorigen Säure enthält.

8. Verfahren zur Herstellung einer Mischung gemäss Anspruch 1, dadurch gekennzeichnet, dass nach Herstellung der Mischungskomponente a) durch Copolymerisation der entsprechenden Monomeren in Emulsion oder Suspension die Mischungskomponente b) bei der Aufarbeitung des Copolymerisates zugesetzt wird.

9. Verfahren nach Anspruch 8, dadurch gekennzeichnet, dass die Mischungskomponente b) als wässrige Lösung zugesetzt wird.

10. Verfahren nach Anspruch 8, dadurch gekennzeichnet, dass 0,01 bis 3 Gew.-% der Mischungskomponente b) in Wasser gelöst oder dispergiert werden, mit einem Gewichtsteil dieser Lösung oder Dispersion höchstens 1 Gewichtsteil des Copolymeren nach dem letzten Waschen behandelt und anschliessend überschüssige Lösung wieder abgetrennt wird, so dass ein Feuchtprodukt entsteht, das ca. 40 bis 60 Gew.-%, bezogen auf Feuchtprodukt, des Copolymeren enthält, wonach das Feuchtprodukt bei Temperaturen bis zu 220 °C, gegebenenfalls unter Verwendung von Inertgas und/oder vermindertem Druck getrocknet und gegebenenfalls schmelzgranuliert wird.

11. Verwendung der Mischung gemäss Ansprüchen 1 bis 7 zum Überziehen von Drähten.

**Claims**

1. A mixture comprising:
a) 99.999 to 98% by weight, relative to the mixture, of at least one ethylene-tetrafluoroethylene copolymer which in addition to polymerised ethylene and tetrafluoroethylene units can contain further polymerised units, derived from monomers which are copolymerisable with tetrafluoroethylene, and
b) 0.001 to 2% by weight, relative to the mixture, of at least one phosphorus acid which in one of its tautomeric forms contains 2 or 3 oxygen atoms and 1 or 2 hydrogen atoms directly bonded to each phosphorous atom, and/or of at least one salt of this acid
which mixture can contain further admixed substances.

2. A mixture according to Claim 1, characterised by 99.99 to 98% by weight of component a) and 0.01 to 2% by weight of component b).

3. A mixture according to Claims 1 and 2, characterised in that it comprises a copolymer containing from 40 to 70 mole %, relative to the copolymer, of polymerised ethylene units.

4. A mixture according to Claims 1 to 3, characterised in that it comprises a copolymer containing polymerised ethylene units and tetrafluoroethylene units and from 0 to 10 mole %, relative to the copolymer, of further units which are derived from at least one ethylenically mono-unsaturated monomer which is copolymerisable with tetrafluoroethylene and does not act as a telogen.

5. A mixture according to Claims 1 to 4, characterised in that it contains as component b) at least one salt whereof the cation is ammonium and/or a metal cation of the first to third main group of the periodic table of the elements, and which is soluble in water at 20 °C to the extent of at least 0,01% by weight.

6. A mixture according to Claims 1 to 5, characterised in that it contains at least one salt of phosphorous acid.

7. A mixture according to Claim 6, characterised in that it contains at least one magnesium, calcium or aluminium salt of phosphorous acid.

8. A process for the preparation of a mixture according to Claim 1, characterised in that after preparation of component a) of the mixture by copolymerisation of the corresponding monomers in emulsion or suspension, component b) of the mixture is added when working up the copolymer.

9. A process according to Claim 8, characterised in that component b) of the mixture is added as an aqueous solution.

10. A process according to Claim 8, characterised in that 0.01 to 3% by weight of component b) of the mixture are dissolved or dispersed in water, at most 1 part by weight of the copolymer is treated, after the last washing, with 1 part by weight of this solution or dispersion and thereafter excess solution is again separated off, so that a moist product results which contains about 40 to 60% by weight, relative to the moist product, of the copolymer, after which the moist product is dried at temperatures of up to 220 °C, optionally using an inert gas and/or working unter reduced pressure, and, optionally, is then meltgranulated.

11. Use of a mixture according to Claims 1 to 7 for coating wires.

**Revendications**

1. Mélange comprenant:
a) 99,999 à 98% en poids d'un ou de plusieurs copolymères d'éthylène et de tétrafluoroéthylène pouvant contenir encore d'autres motifs polymérisés de monomères copolymérisables avec le tétrafluoroéthylène, et
b) 0,001 à 2% en poids d'un ou de plusieurs acides du phosphore contenant, sous l'une de leurs formes tautomères, 2 ou 3 atomes d'oxygène et 1 ou 2 atomes d'hydrogène directement liés à chaque atome de phosphore, et/ou de sels de ces acides,
mélange qui peut encore comprendre d'autres matières.

2. Mélange selon la revendication 1 comprenant 99,99 à 98% en poids du composant a) et 0,01 à 2% du composant b).

3. Mélange selon la revendication 1 ou 2, caractérisé en ce qu'il comprend un copolymère avec 40 à 70 moles % de motifs d'éthylène.

4. Mélange selon l'une quelconque des revendications 1 à 3, caractérisé en ce qu'il comprend un copolymère formé d'éthylène et de tétrafluoroéthylène avec 0 à 10 moles % d'autres motifs d'un ou de plusieurs monomères à und seule insaturation éthylènique, copolymérisables avec le tétrafluoroéthylène et n'ayant aucune action télogène.

5. Mélange selon l'une quelconque des revendications 1 à 4, caractérisé en ce qu'il comprend comme composant b) un ou plusieurs sels dont le cation est le cation ammonium et/ou un cation de métal des groupes 1 à 3 de la classification périodique des éléments, et qui sont solubles dans l'eau à raison d'au moins 0,01% en poids à la température de 20 °C.

6. Mélange selon l'une quelconque des revendications 1 à 5, caractérisé en ce qu'il contient un ou plusieurs sels de l'acide phosphoreux.

7. Mélange selon la revendication 6, caractérisé en ce qu'il contient du phosphite de magnésium, et/ou de calcium et/ou d'aluminium.

8. Procédé de préparation d'un mélange selon l'une quelconque des revendications 1 à 7, caractérisé en ce que, après avoir formé le composant a) par copolymérisation des monomères correspondants en émulsion ou en suspension, on lui ajoute le composant b) au moment de son traitement.

9. Procédé de préparation selon la revendication 8, caractérisé en ce que le composant b) est ajouté en solution aqueuse.

10. Procédé de préparation selon la revendication 8, caractérisé en ce qu'on dissout ou disperse dans de l'eau 0,01 à 3% en poids du composant b), on traite au maximum 1 partie du copolymère après le dernier lavage de celui-ci, avec 1 partie en poids de cette solution ou dispersion, puis on sépare l'excès de solution pour obtenir un produit humide à 40–60% en poids d'environ

de copolymère, produit que l'on sèche à des températures pouvant s'élever jusqu'à 220°C, éventuellement dans une atmosphère de gaz inerte et/ou sous pression réduite, et le cas échéant que l'on granule à l'état fondu.

11. Utilisation d'un mélange selon l'une quelconque des revedications 1 à 7, notammant pour le revêtement et le gainage des fils métalliques.